# EUROPEAN PATENT APPLICATION

(11) **EP 1 151 876 A1**
(43) Date of publication of application: **07.11.2001**
(21) Application number: 00201122.9
(22) Date of filing: 25.04.2000
(51) Int. Cl.: B60D 1/64, B60D 1/62

(54) **Device suitable for attaching a socket associated with a towing hook to a vehicle**

(30) Priority: 30.03.1999 NL 1011699
(71) Applicant: Safenat Paneach N.V., Willemstad, Curaçao (AN)
(72) Inventor: van Strien, A.C., 4455 TZ Nieuwdorp (NL)
(74) Representative: Veldman-Dijkers, Cornelia G.C., Ir.

(57) **Abstract**

A device which is suitable for attaching a socket associated with a towing hook to a vehicle. The device comprises a supporting part (3) for the socket which is pivotable about a pivot pin (2). The supporting part is pivotable between a first preferred position, in which the supporting part (3) extends under a bumper of the vehicle, where it is exposed to view and accessible, and a second preferred position, in which the supporting part (3) is positioned behind the bumper of the vehicle, where it is substantially hidden from view, and vice versa. The supporting part can be fixed in either one of said preferred positions with respect to a part which is fixedly connected to the vehicle.

## Description

The invention relates to a device which is suitable for attaching a socket associated with a towing hook to a vehicle, which device comprises a supporting part for the socket which is pivotable about a pivot pin between a first preferred position, in which the supporting part extends under a bumper of the vehicle, where it is exposed to view and accessible, and a second preferred position, in which the supporting part is positioned behind the bumper of the vehicle, where it is substantially hidden from view, and vice versa, wherein the supporting part can be fixed in either one of said preferred positions with respect to a part which is fixedly connected to the vehicle.

A device of this kind is in particular suitable for use with detachable towing hooks for passenger cars.

Detachable towing hooks for passenger vehicles are generally known by now, and one of their advantages is the fact that, once detached, they are no longer in the way when a person is standing behind the car in order to load or unload goods, and that the towing hook no longer mars the appearance of the car to a smaller or larger extent.

With these towing hooks, a distinction between vertical and horizontal systems can be made, depending on the direction in which the detachable ball bar is inserted into the housing that is fixedly connected to the vehicle.

With the so-called horizontal systems, a housing is usually present under the bumper of the car, into which housing the detachable ball bar is inserted upon being fitted, after which the ball bar is locked in position, which may or may not take place automatically.

With the vertical systems, the housing is placed behind the bumper, where it is hidden from view, with the opening facing downwards. Upon being fitted, the more or less U-shaped ball bar is inserted with its end into the housing in vertical direction, after which it is automatically locked in position. The advantage of a vertical system is the fact that the housing is hidden from view after the ball bar has been detached. The only part of the towing hook that is generally exposed to view after detachment of the ball bar is the supporting part and the socket that is mounted thereon.

In order to hide this last visible part from view, pivoted or swinging supporting parts for a socket have been developed, which make it possible to pivot or swing the socket to a position behind the bumper. Generally, constructions of this type are so designed that the socket plate can be placed in to discrete positions, viz. a position wherein the socket projects under the bumper and a position wherein the socket is positioned in or behind the bumper.

Frequently a U-shaped socket supporting part is used with constructions of this kind, within which a tension spring is disposed, in such a manner that the tension spring possesses a minimum of potential energy in the two preferred positions of the socket supporting part, or, in other words, retains the socket supporting part in said preferred positions.

One drawback of constructions of this kind is that they are often not compact, which may be a problem in connection with the frequently very small amount of space in the bumper. Another drawback is the fact that a person's fingers can be injured on sharp parts of the construction or become wedged upon pivoting or swinging. Also the fact that the stored spring energy is suddenly released during the second half of the pivoting movement may lead to a person's fingers being injured.

A final drawback may be the fact that the construction is sensitive to dirt and corrosion, as a result of which the construction may become jammed or difficult to move.

The object of the present invention is to provide a device comprising a relatively low-cost and relatively compact socket supporting part, which supporting part is moreover easy to operate.

According to the present invention, this objective is accomplished in that one part forming the supporting part or the fixed part includes a pin which is movable against spring force, whilst the other part forming the fixed part or the supporting part includes at least two cavities which define said preferred positions, wherein in each preferred position one end of the pin is positioned under spring force in the cavity associated with said preferred position.

A locking engagement in either one of the two preferred positions can readily be effected by means of the pin which is movable under spring force and which can snap into said cavities.

A device of this kind can be of relatively low-cost and compact construction. Only upon leaving a preferred position is some force required for urging the pin out of the cavity. Hardly any force is required for pivoting the supporting part from one preferred position to the other preferred position. Thus it has been realised that hardly any energy is required and in particular that hardly any energy is released upon pivoting of the supporting part from one preferred position to the other preferred position. A slight force is required upon leaving one preferred position and a slight force is released upon entering the other preferred position, wherein the pin is urged out of the cavity or moved into the cavity under spring force.

For reasons of compactness, the pin which is movable under spring pressure can be accommodated in a semi-closed guide cylinder, in which also a compression spring is present, which compression spring urges the pin outwards. This makes it possible to mount the complete pressure pin construction as one compact unit on said one part. Preferably, the guide cylinder is provided with external screw thread, so that a correct adjustment of the pin with respect to the cavities can for example be effected by screwing the guide cylinder into a weld nut which is welded to said one part. The cylinder can for example be locked in the desired position by means of a glue which is applied to the screw thread.

The invention will be explained in more detail hereafter with reference to the drawings, in which:
Figure 1 is a front view of a first embodiment of a device according to the invention;
Figure 2 shows an enlarged part II of the device of Figure 1;
Figure 3 is a side view of the device of Figure 1;
Figure 4 is an enlarged part IV of the side view of Figure 3;
Figure 5 is a front view of a second embodiment of a device according to the invention;
Figure 6 is a side view of the device of Figure 5;
Figure 7 shows an enlarged part VII of the side view of Figure 6; and
Figure 8 shows an enlarged part VIII of the side view of Figure 6.

Parts corresponding to each other are indicated by the same numerals in the figures.

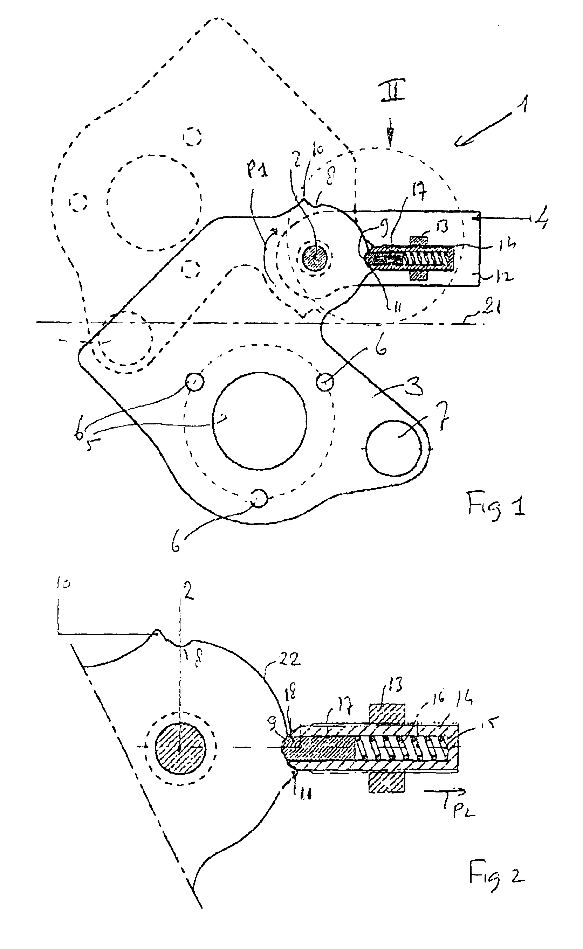

Figures 1 - 4 are front views and side views of a first embodiment of a device 1 according to the invention, which device comprises a supporting plate 3 forming a supporting part, which is pivotable about a pivot pin 2, and a part 4 which is fixedly connected to a vehicle.

The supporting plate 3 includes an opening 5 and holes 6 surrounding said opening for attaching a socket (not shown) thereto. Supporting plate 3 furthermore comprises an eye 7, into which a person can insert one of his fingers. Supporting plate 3 furthermore includes two cavities 8, 9 which are formed in the transverse face of the supporting plate 3 and two dams 10, 11 located on sides of the cavities remote from each other.

The fixed part 4 comprises a baseplate 12, a nut 13 welded thereon and an externally threaded guide cylinder 14 within said nut. The central axis 15 of guide cylinder 14 extends transversely to pivot pin 2. Guide cylinder 14 is closed on a side remote from pivot pin 2 and open on a side facing pivot pin 2. Present within guide cylinder 14, near the closed end thereof, is a compression spring 16, and a pin 17 is present near the open end. Pin 17 is provided with a spherical head 18 on a side remote from compression spring 16, which head extends beyond the open end of the guide cylinder 14.

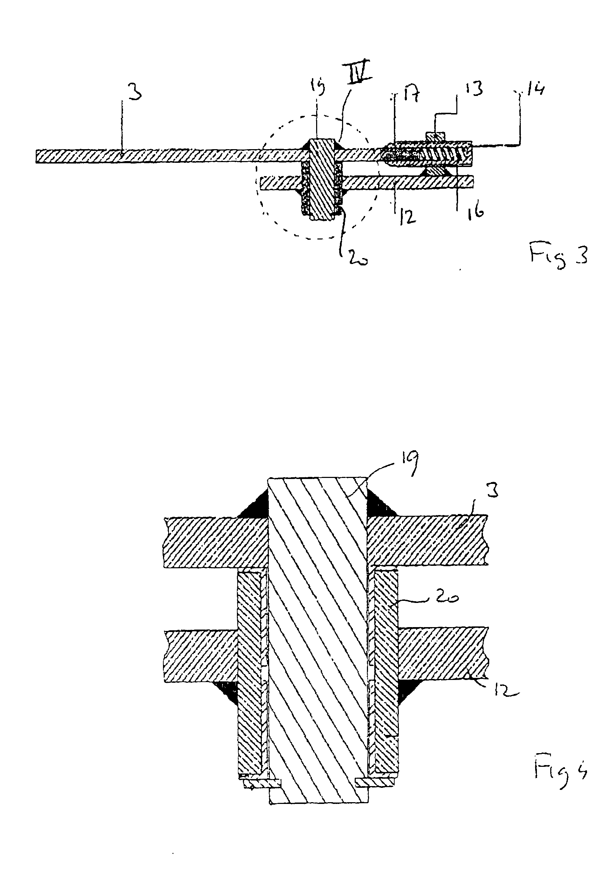

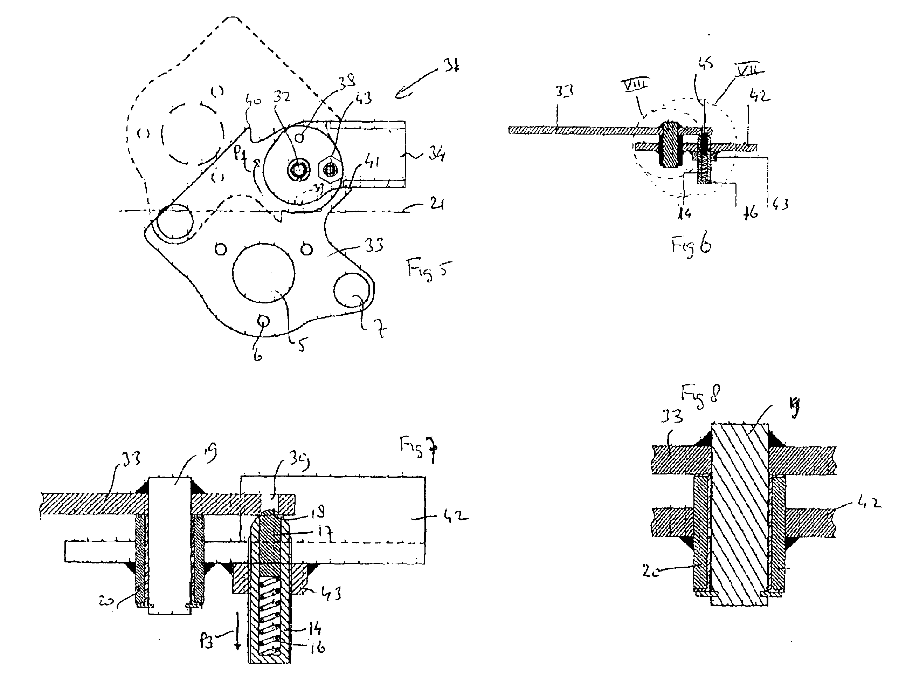

As is clearly shown in Figures 3 and 4, a pin 19 extending transversely to the supporting plate 3 is welded on said supporting plate 3, which pin is journalled in a bush 20 which is welded on plate 12 of fixed part 4.

The operation of the device 1 will now be explained in more detail with reference to Figure 1. In the position of the supporting plate 3 which is illustrated in full lines in Figure 1, the openings 5 and holes 6 are located under a bumper line 21 of a vehicle (not shown) and they are accessible for fitting a socket therein and subsequently inserting a plug into the socket. If it is desired to hide the supporting plate 3 from sight, the supporting plate 3 is pivoted in the direction indicated by arrow P1 by means of a finger inserted into eye 7 to the position which is shown in dotted lines in Figure 1. Pin 17 is thereby moved out of cavity 9 in the direction indicated by arrow P2 against the force of spring 16. During said pivoting of supporting plate 3 in the direction indicated by arrow P1, head 18 of pin 17 slides along the transverse face 22 of supporting plate 3 until the spherical head 18 lands in cavity 8 and is pressed into said cavity 8 by spring 16 in a direction opposed to the direction indicated by arrow P2. Further pivoting of the supporting plate 3 in the direction indicated by arrow P1 is prevented in an effective manner owing to the fact that guide cylinder 14 abuts against dam 10 when head 18 is positioned in cavity 8. Similarly, supporting plate 3 is prevented from pivoting beyond the position illustrated in full lines as a result of the fact that the guide cylinder 14 abuts against dam 11 in this position.

Figures 5 - 8 show a second embodiment of a device 30 according to the invention, which comprises a supporting plate 33 which is pivotable about a pivot pin 32, and a part 34 which is fixedly connected to the vehicle. Plate 33 of device 31 is different from the supporting plate 31 of Figure 1 in that cavities 38, 39 are present in the supporting plate 33 itself rather than in the transverse face of the supporting plate 3. Cavities 38, 39 are openings which extend transversely through the supporting plate 33. Supporting plate 33 is furthermore provided with two stops 40, 41 which are made up of projections.

Fixed part 34 comprises a plate 42 on which a nut 43 is welded. Guide cylinder 14 can be screwed into said nut 43. The central axis 45 of the guide cylinder extends parallel to the pivot pin 32. Guide cylinder 14 includes the compression spring 16 and the pin 17. Pin 17 includes a spherical head 18, which is positioned partially within cavity 39 in the position of the supporting plate 33 which is shown in Figures 5 - 7. In this position the supporting plate 33 extends at least partially under the bumper line 21. By pivoting the supporting plate 33 about pivot pin 32 in the direction indicated by arrow P1, the pin 17 is moved in the direction indicated by arrow P3 against the spring force of spring 16 and slides over the surface of the supporting plate 33 until head 18 is pressed into cavity 38 in a direction opposed to the direction indicated by arrow P3 as a result of the spring force exerted by spring 16. Stop 40 abuts against plate 42 in this position. This position is illustrated in dotted lines in Figure 5. In the position which is illustrated in full lines in Figure 5 stop 41 abuts against plate 42. Stops 40, 41 prevent supporting plate 33 from pivoting beyond the two desired positions in a simple manner.

It is also possible to exchange nut 13 for a threaded hole to be formed in plate 33.

It is furthermore possible to use a ball instead of a pin. The advantage of using a pin, however, is that it can project any desired length from the cylinder, which makes it easier to adjust.

## Claims

1. A device which is suitable for attaching a socket associated with a towing hook to a vehicle, which device comprises a supporting part for the socket which is pivotable about a pivot pin between a first preferred position, in which the supporting part extends under a bumper of the vehicle, where it is exposed to view and accessible, and a second preferred position, in which the supporting part is positioned behind the bumper of the vehicle, where it is substantially hidden from view, and vice versa, wherein the supporting part can be fixed in either one of said preferred positions with respect to a part which is fixedly connected to the vehicle, **characterized in that** one part forming the supporting part or the fixed part includes a pin which is movable against spring force, whilst the other part forming the fixed part or the supporting part includes at least two cavities which define said preferred positions, wherein in each preferred position one end of the pin is positioned under spring force in the cavity associated with said preferred position.

2. A device according to claim 1, **characterized in that** the pin is movable under spring force in a direction parallel to the pivot pin.

3. A device according to claim 1, **characterized in that** the pin is movable under spring force in a direction transversely to the pivot pin.

4. A device according to claim 3, **characterized in that** the central axis of the pin intersects the pivot pin.

5. A device according to any one of the preceding claims, **characterized in that** the supporting part includes said cavities, whilst the fixed part includes the pin which is movable against spring force.

6. A device according to any one of the preceding claims, **characterized in that** the device includes stop means for limiting the pivoting movement of the supporting part between the two preferred positions.
